(19) Europäisches Patentamt
European Patent Office
Office européen des brevets

(11) Publication number: 0 556 727 A1

# (12) EUROPEAN PATENT APPLICATION

(21) Application number: 93102178.6

(22) Date of filing: 11.02.93

(51) Int. Cl.[5]: C08C 19/36, C08C 19/28

(30) Priority: 20.02.92 JP 70207/92
27.08.92 JP 252239/92

(43) Date of publication of application:
25.08.93 Bulletin 93/34

(84) Designated Contracting States:
DE FR GB IT

(71) Applicant: KURARAY CO., LTD.
1621 Sakazu
Kurashiki-City Okayama Prefecture 710(JP)

(72) Inventor: Ishiura, Kazushige
98, Ohta, Hasaki-cho
Kashima-gun, Ibaraki-pref.(JP)
Inventor: Yamada, Tsutomu
5-1-34, Shitte, Kamisu-cho
Kashima-gun, Ibaraki-pref.(JP)
Inventor: Kanbara, Hiroshi
98, Ohta, Hasaki-cho
Kashima-gun, Ibaraki-pref.(JP)
Inventor: Takamatsu, Hideo
167-55, Miyatsudai, Kashima-cho
Kashima-gun, Ibaraki-pref.(JP)

(74) Representative: Müller-Boré & Partner
Patentanwälte
Isartorplatz 6 Postfach 26 02 47
D-80059 München (DE)

## (54) Diene polymer having functional groups, and rubber composition containing it.

(57) A functional groups-containing diene polymer having a molecular weight of 1,100 to 110,000 and obtained by permitting functional groups represented by formulas 1, 2 and 3, respectively,

EP 0 556 727 A1

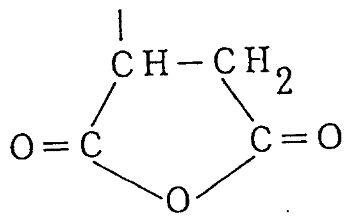

1

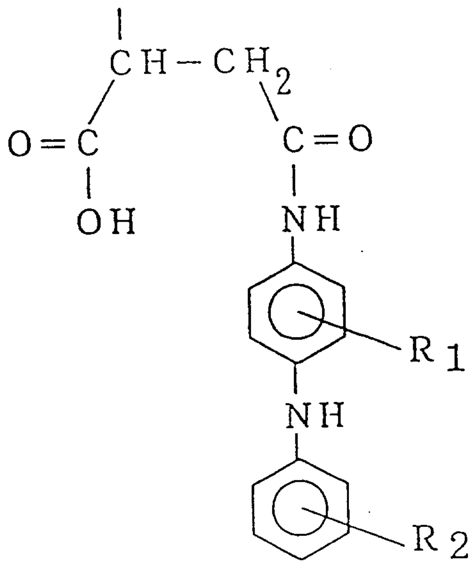

or

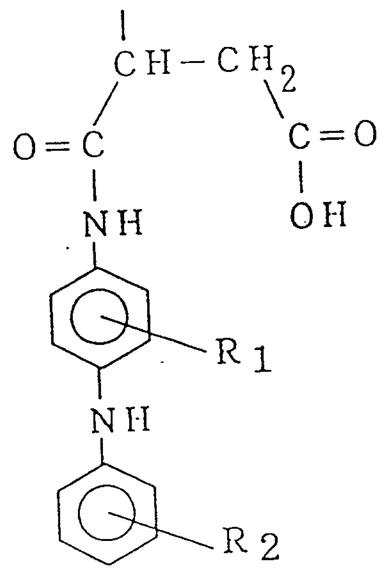

2

wherein $R_1$ and $R_2$ each represents a hydrogen atom or an alkyl group having 1 to 10 carbon atoms;

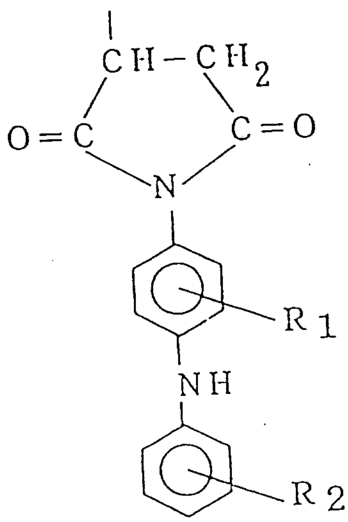

3

wherein $R_1$ and $R_2$ each represents a hydrogen atom or an alkyl group having 1 to 10 carbon atoms,
to add to a diene polymer having a molecular weight of 1,000 to 50,000 in molar ratio of functional group A/-(functional groups B and C) of 40/60 to 0/100 and in a total number of functional groups A, B and C per 100 pieces of units from the diene monomer constituting said diene polymer of 1 to 15; and a rubber composition comprising as essential components the functional groups-containing diene polymer and a diene-based rubber.

## BACKGROUND OF THE INVENTION

### 1. Field of the Invention

The present invention relates to a diene polymer having in the molecule thereof functional groups A, B and C represented by the following formulas 1, 2 and 3 respectively, and to a rubber composition as essential components comprising the diene polymer and a diene-based rubber:

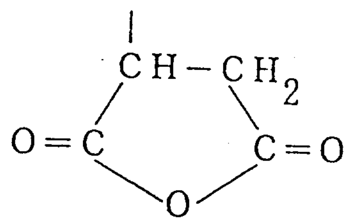

1

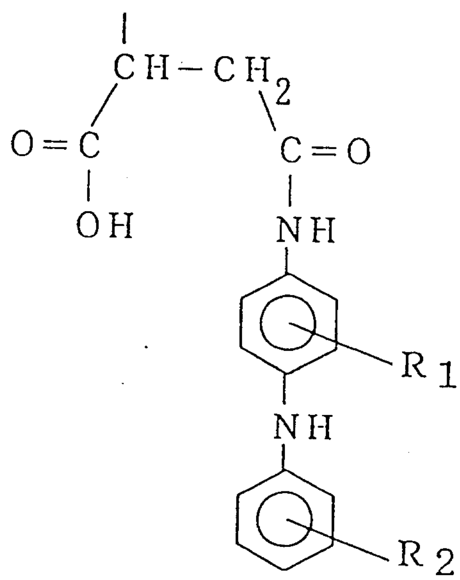

or

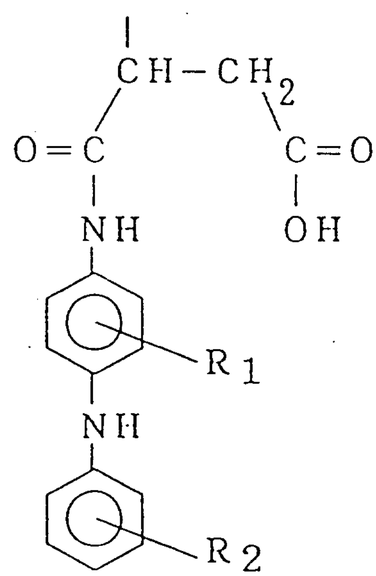

2

wherein $R_1$ and $R_2$ each represents a hydrogen atom or an alkyl group having 1 to 10 carbon atoms;

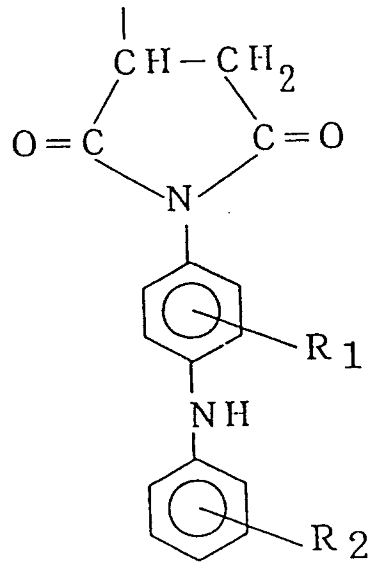

3

wherein $R_1$ and $R_2$ each represents a hydrogen atom or an alkyl group having 1 to 10 carbon atoms.

2. Description of the Related Art

Various rubber goods such as tires require, in addition to durability, good appearance to meet recent sophisticated consumer needs.

Rubber goods generally decrease their properties when exposed to heat, sunlight, weather and the like for a long period of time due to heat aging or ozone cracking. In particular, ozone cracking influences the property decrease to a large extent.

In order to prevent ozone cracking, there are generally used antioxidants having resistance to ozone, such as N-phenyl-N'-isopropyl-p-phenylenediamine, N,N'-diphenyl-p-phenylenediamine and N-phenyl-N'-(1,3-dimethylbutyl)-p-phenylenediamine.

These antioxidants with good resistance to ozone, however, cause intense bleeding and hence cause various troubles such as ready staining of the surface of the rubber goods containing them and migration to other materials contacting the rubber goods to stain them. They have another drawback, when used at high temperatures for a long period of time, of ready volatility, thereby being unable to maintain the resistance to ozone. There has been strongly desired development of an antioxidant that can satisfy both requirements of improvement of durability and prevention of staining.

Kurpichev et al proposed, to solve the above problems of migration, staining and volatility of antioxidants, a process which comprises epoxidizing butadiene rubber (BR) with a peracid and then adding an aromatic amine having antioxidizing effect, thereby grafting the antioxidant to BR (Rubber Chemical Technology, 43, 1225 (1970)). The modified BR obtained by this process has units represented by the formula 4.

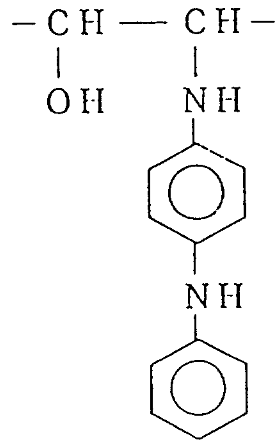

4

The process, more concretely, comprises dissolving BR in a solvent and adding dropwise to the solution hydroperoxide in the presence of a carboxylic acid such as benzoic acid, thereby generating in the reaction zone a peracid such as perbenzoic acid, which then epoxidizes part of carbon-carbon double bonds of BR. The reaction mixture is washed with water to remove excess carboxylic acid, hydroperoxide, unreacted peracid and the like, then dewatered, concentrated and dried, to give an epoxidized BR having units represented by formula 5,

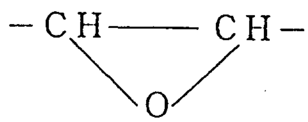

5

to which epoxy ring p-aminodiphenylamine is permitted to add, to obtain the desired BR having the units represented by formula 4.

This process however has many reaction steps and, further, causes the product to be of low mechanical properties due to low co-curability resulting from the partial expoxidation of carbon-carbon double bonds, which is not preferred.

SUMMARY OF THE INVENTION

Accordingly, an object of the present invention is to provide a functional groups-containing diene polymer being readily producible and having excellent resistance to ozone and improved properties with respect to migration, staining, volatility and the like.

Another object of the present invention is to provide a rubber composition comprising as essential components the above functional groups-containing diene polymer and a general-purpose diene-based rubber.

Thus, the present invention provides a functional groups-containing diene polymer having a molecular weight of 1,100 to 110,000 and obtained by permitting functional groups represented by formulas 1, 2 and 3, respectively,

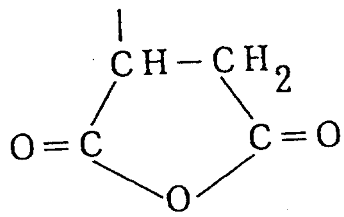

1

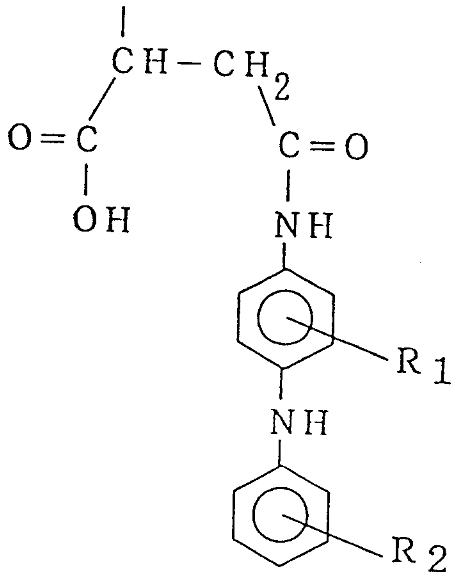

or

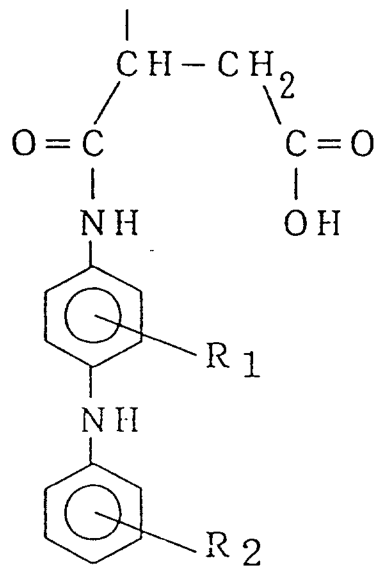

2

wherein $R_1$ and $R_2$ each represents a hydrogen atom or an alkyl group having 1 to 10 carbon atoms;

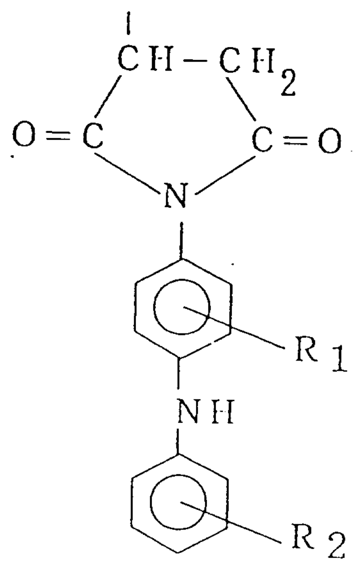

3

wherein $R_1$ and $R_2$ each represents a hydrogen atom or an alkyl group having 1 to 10 carbon atoms, to add to a diene polymer having a molecular weight of 1,000 to 50,000 in molar ratio of functional group A/(functional groups B and C) of 40/60 to 0/100 and in a total number of functional groups A, B and C per 100 pieces of units from the diene monomer constituting said diene polymer of 1 to 15.

The present invention also provides a rubber composition comprising as essential components a functional groups-containing diene polymer having a molecular weight of 1,100 to 110,000 and obtained by permitting functional groups represented by formulas 1, 2 and 3, respectively, to add to a diene polymer having a molecular weight of 1,000 to 50,000 in molar ratio of (functional group A)/(functional groups B and

C) of 40/60 to 0/100 and in a total number of functional groups A, B and C per 100 pieces of units from the diene monomer constituting said diene polymer of 1 to 15, and a diene-based rubber;
the ratio by weight between the two components being (functional groups-containing diene polymer)/diene-based rubber being in a range of from 1/99 to 30/70.

## DETAILED DESCRIPTION OF THE INVENTION

The functional groups-containing diene polymer of the present invention can be produced by the following process.

At first, a main chain constituting the base of the functional groups-containing diene polymer is formed. The base is obtained by effecting anionic polymerization or radical polymerization of a diene monomer. In the diene-based polymer thus obtained, part of its carbon-carbon double bonds may be hydrogenated, which is obtained by partially hydrogenating the originally obtained diene-based polymer in the usual manner.

For anionic polymerization, an initiator of sodium/naphthalene, an alkyl lithium or the like is used; and for radical polymerization, azobisisobutyronitrile, benzoyl peroxide or the like is used. These polymerizations are generally effected in the presence of a hydrocarbon solvent such as hexane, heptane, toluene or xylene, at a temperature of -78 to 150 °C and for a polymerization time of 1 to 10 hours.

To the thus obtained diene polymer or hydrogenated product thereof, functional group A is introduced by addition of maleic anhydride. The addition reaction can, for example, be conducted by reacting the diene polymer or its hydrogenated product with an acid anhydride with stirring in the presence of, as required, a hydrocarbon solvent such as hexane, heptane, toluene or xylene, at 20 to 200 °C for 1 to 100 hours.

At last, p-aminodiphenylamine which may have an alkyl group having 1 to 10 carbon atoms in aromatic ring is permitted to add to the diene polymer or its hydrogenated product having introduced functional group A, to convert part or all of the functional group A to functional group B. Thereafter, part or all of the functional groups B is, as required, converted to functional group C, by dehydration. Addition of p-aminodiphenylamine can be effected by, for example, stirring the diene polymer or its hydrogenated product having functional group A and p-aminodiphenylamine in the presence of, as required, a hydrocarbon solvent such as hexane, heptane, toluene or xylene, at 100 to 300 °C for 1 to 100 hours.

Or, the functional groups-containing diene polymer of the present invention can be produced by permitting a diphenylamine-containing maleimide which may have an alkyl group having 1 to 10 carbon atoms in aromatic ring to add to the main chain of a diene polymer. This process provides functional group-containing diene polymers in which the molar ratio of functional group A/functional group B/functional group C is 0/0/100.

Examples of the diene polymer used in the invention are polymers and copolymers of conjugated dienes such as isoprene, butadiene and pentadiene, copolymers of these conjugated dienes with a vinyl compound such as styrene, $\alpha$-methylstyrene or acrylonitrile. Concrete examples of such diene polymers are polyisoprene, polybutadiene, isoprene-butadiene copolymer, isoprene-styrene copolymer, butadiene-styrene copolymer, isoprene-acrylonitrile copolymer and butadiene-acrylonitrile copolymer. Polyisoprene, polybutadiene and isoprene-butadiene copolymer are particularly preferred among the above polymers.

The functional groups-containing diene polymer of the present invention has side chains of functional groups A, B and C in a molar ratio of (functional group A)/(functional group B + functional group C) of 40/60 to 0/100. If the molar ratio of (functional group A)/(functional group B + functional group C) exceeds 40/60, i.e. if the molar ratio of (functional group B + functional group C) in the total functional groups is less than 60%, the functional groups-containing diene polymer will have insufficient antioxidizing effect.

In the functional groups-containing diene polymer of the present invention, there are no specific restrictions with respect to the molar ratio of (functional group B)/(functional group C), but the ratio is preferably in a range of 80/20 to 0/100.

In the present invention, it is necessary that the ratio of addition of functional groups A, B and C to the diene polymer be 1 to 15 pieces of the sum of functional groups A, B and C based on 100 pieces of units from the diene monomer constituting the main chain diene polymer. If the addition ratio of functional groups A, B and C is less than this range, the functional groups-containing diene polymer will not produce good antioxidizing effect. If the addition ratio exceeds the above range, the functional groups-containing diene polymer will have poor compatibility with diene-based rubbers.

The diene polymer constituting the functional groups-containing diene polymer of the present invention may have any microstructure, but it is desirable that at least 50% of 1,4-adduct be contained.

Hydrogenated products of diene polymers can be used as base polymer for the functional groups-containing diene polymer of the present invention. Use of such hydrogenated diene polymers improves

weatherability of the resulting functional groups-containing diene polymers. Hydrogenation of a diene polymer can be performed in the usual manner, for example by contacting a diene polymer with hydrogen gas under a pressure of 1 to 100 kg/cm$^2$ for 0.1 to 100 hours, in the presence of a homogeneous catalyst such as Ziegler catalyst comprising a combination of a compound of a transition metal of group IV to VIII of the periodic table with an alkylated metal of group I to III or a heterogeneous catalyst comprising a metal such as nickel, palladium, copper-chromium, platinum or ruthenium carried, as required, on activated carbon, silica or diatomaceous earth and at a temperature of 20 to 200 °C.

With hydrogenated diene polymers, the hydrogenation ratio is not specifically limited, but it is preferably not more than 90%, thereby assuring sufficient of carbon-carbon double bonds present in the main chain of the diene polymer to introduce functional group A thereinto.

It is necessary that the functional groups-containing diene polymer of the present invention have a molecular weight of 1,100 to 110,000. With a molecular weight of less than 1,100, the functional groups-containing diene polymer has insufficient co-curability with diene-based rubbers, thereby preventing bleeding only insufficiently, and, further, gives compositions with diene rubbers having poor mechanical properties. With a molecular weight exceeding 110,000, the functional groups-containing diene polymer has too strong co-curability with diene-based rubbers, thereby diffusing thereinto to an insufficient extent, and hence produces the effect of antioxidation insufficiently.

Examples of diene rubbers usable in the present invention are natural rubber (NR), isoprene rubber (IR), butadiene rubber (BR) and styrene-butadiene rubber (SBR). These diene-based rubbers may be used singly or in combination of 2 or more. Further these diene-based rubbers may be used as admixtures with a saturated type rubber such as ethylene-propylene rubber (EPDM), butyl rubber (IIR) or chloroprene rubber (CR).

In the present invention, it is necessary that the functional groups-containing diene polymer and a diene-based rubber be used in a ratio by weight of (functional groups-containing diene polymer)/diene-based rubber of 1/99 to 30/70. If the ratio is less than 1/99, i.e. if the amount of the functional group-containing diene polymer added is less than 1% by weight, the resulting rubber composition will have insufficient resistance to aging and ozone.

On the other hand, if the ratio by weight between the functional groups-containing polymer and the diene-based rubber exceeds 30/70, i.e. if the amount of the functional groups-containing polymer added exceeds 30% by weight, the resulting rubber composition will have insufficient mechanical strength.

The rubber composition of the present invention may, as required, incorporate the usual additives for rubber, e.g. fillers such as carbon black, clay and calcium carbonate, extenders, flame retarders, plasticizers, sulfur and vulcanization accelerators. Conventional antioxidants, such as N-phenyl-N'-isopropyl-p-phenylenediamine, N,N'-diphenyl-p-phenylenediamine and N-phenyl-N'-diphenyl-p-phenylenediamine, may also be added within limits not to cause undesirable staining. In this case, the total amount of these conventional antioxidants added is preferably not more than 1% by weight based on the total weight of the functional groups-containing diene polymer and the diene-based rubber.

The rubber composition of the present invention can be obtained by mixing the functional groups-containing diene polymer, diene-based rubber and other necessary components through any one of various mixers such as roll mixers, kneaders and Banbary mixer.

The composition of the present invention has excellent durability and resistance to ozone and heat aging and, at the same time, causes no staining on tire surface or cracking, since it is free from bad staining, migration property and volatility. The composition is therefore expected to be used for the side wall, carcass and tread of tires and industrial applications such as hoses and conveyer belts, as well as for footwears and the like.

EXAMPLES

Other features of the invention will become apparent in the course of the following descriptions of exemplary embodiments which are given for illustration of the invention and are not intended to be limiting thereof. In the Examples and Comparative Examples that follow, "molecular weight" means "number average molecular weight (Mn)".

Example 1

Isoprene monomer was subjected to anionic polymerization in hexane and with n-butyl lithium as an initiator, to give a polyisoprene having a molecular weight of 20,000.

To 100 parts by weight of the polyisoprene was added 1.5 parts by weight of maleic anhydride, and the mixture was heated with stirring at 180°C for 10 hours, to yield polyisoprene (I) having functional group A of formula 1 in an amount of 1.5 pieces per 100 pieces of isoprene units.

Then, 2.8 parts by weight of p-aminodiphenylamine was added to 100 parts by weight of the polyisoprene (I) thus obtained, and the mixture was heated with stirring at 160°C for 10 hours, to yield a polyisoprene (II) having functional groups of formulas 1, 2 and 3 in a total amount of functional groups A, B and C of 1.5 pieces per 100 pieces of isoprene units. The polyisoprene (II) thus obtained had a molecular weight of 23,000 and was found, by measurement of acid value and by $^1$H-NMR spectrometry, to have functional groups A, B and C in a molar ratio of A/B/C of 0.15/0/0.75.

Example 2

To 100 parts by weight of the polyisoprene obtained in the same manner as in Example 1 and having a molecular weight of 20,000, 5.0 parts by weight of maleic anhydride was added and the mixture was reacted to yield a polyisoprene (III) having 3.0 pieces of functional groups of formula 1 per 100 pieces of isoprene units.

Then, 9.9 parts by weight of p-aminodiphenylamine was added to 100 parts by weight of the polyisoprene (III) thus obtained, and the mixture was heated with stirring under the same conditions as in Example 1, to yield a polyisoprene (IV) having functional groups of formulas 1, 2 and 3 in a total amount of functional groups A, B and C of 3.0 pieces per 100 pieces of isoprene units. The polyisoprene (IV) thus obtained had a molecular weight of 27,000 and was found, by measurement of acid value and by $^1$H-NMR spectrometry, to have functional groups A, B and C in a molar ratio of A/B/C of 0.10/0/0.80.

Reference Example 1

A polybutadiene having a molecular weight of 20,000 and obtained in the same manner as in Example 1 was dissolved in a solvent. Benzoic acid was added to the solution, and the mixture was, while hydroperoxide was added dropwise, stirred vigorously, to epoxidize part of the carbon-carbon double bonds. After washing off with water of the excess benzoic acid, hydroperoxide solution, unreacted peracid and the like, the mixture was dewatered, concentrated and dried, to give an epoxidized BR. The epoxidized BR was again dissolved in a solvent, and to the obtained solution p-aminodiphenylamine was added in an equimolar amount based on the epoxy ring, to obtain a polybutadiene (I) having functional groups represented by formula 4 in an amount of 5.0 pieces per 100 pieces of butadiene units. The polybutadine had a molecular weight of 28,000.

Examples 3 through 6 and Comparative Examples 1 through 6

Mixtures containing 100 parts by weight of polyisoprene rubber (IR), 45 parts by weight of HAF carbon black, 2 parts by weight of stearic acid, 5 parts by weight of zinc white, 2 parts by weight of sulfur, 1 part by weight of a vulcanization accelerator (N-cyclohyxyl-2-benzothiazilsulfenamide) and various antioxidants as shown in Tables 1 and 2 in amounts as shown were mixed through Banbary mixer, to obtain unvulcanized compounds. The unvulcanized compounds thus obtained were processed by pressing into vulcanized rubber sheets.

Using the unvulcanized compounds and vulcanized sheets thus obtained, the antioxidants used were compared for volatility, staining, resistance to ozone and the like.

The volatility was evaluated by subjecting an unvulcanized compound sample to heat aging in air (70°C or 100°C), followed by measurement of its degree of plasticity. The degree of plasticity of a compound was measured with a rapid plastometer.

The staining of a rubber composition sample as caused by the antioxidant contained therein was evaluated by a method which comprises placing a designated amount of vulcanized sheet piece in a glass wide-mouthed bottle, heating the bottle and checking how the color of an acrylic paint placed near the mouth changed. The color change was expressed in accordance with JIS Z8721, i.e. in terms of "hue, lightness/colorfulness", wherein larger lightness value means higher lightness and the larger colorfulness value means more intense color.

The resistance to ozone was evaluated in accordance to JIS K6301 and the degree of deterioration by ozone was obtained by visual counting of the number of cracks on the surface of the rubber composition tested (few: A, B, C: many) and by visual checking of the size of cracks (small and shallow: 1 through 5: large and deep).

The test results and the mechanical properties of the vulcanized sheets are summarized in Tables 3 and 4.

Table 1

| | Example 3 | Example 4 | Example 5 | Example 6 | Comparative Example 1 |
|---|---|---|---|---|---|
| Formulation (parts by weight) | | | | | |
| IR | 97 | 95 | 97 | 95 | 95 |
| Carbon black | 45 | 45 | 45 | 45 | 45 |
| Zinc white #3 | 5 | 5 | 5 | 5 | 5 |
| Stearic acid | 2 | 2 | 2 | 2 | 2 |
| Sulfur | 2 | 2 | 2 | 2 | 2 |
| Vulcanization accelerator | 1 | 1 | 1 | 1 | 1 |
| Antioxidant | | | | | |
| PI* (II) | 3 | 5 | 0 | 0 | 0 |
| 〃 (IV) | 0 | 0 | 3 | 5 | 0 |
| PB** (I) | 0 | 0 | 0 | 0 | 3 |

IR: IR-10, made by Kuraray Co., Ltd.

Carbon black: DIABLACK H, made by Mitsubishi Kasei Corp.

Vulcanization accelerator: NOCCELER CZ, made by Ouchi-Shinko Chemical Industrial Co., Ltd.

* polyisoprene

** polybutadiene

Table 2

| | Comp. Ex. 2 | Comp. Ex. 3 | Comp. Ex. 4 | Comp. Ex. 5 | Comp. Ex. 6 |
|---|---|---|---|---|---|
| <u>Formulation</u> (parts by weight) | | | | | |
| IR | 100 | 100 | 100 | 100 | 100 |
| Carbon black | 45 | 45 | 45 | 45 | 45 |
| Zinc while #3 | 5 | 5 | 5 | 5 | 5 |
| Stearic acid | 2 | 2 | 2 | 2 | 2 |
| Sulfur | 2 | 2 | 2 | 2 | 2 |
| Vulcanization accelerator | 1 | 1 | 1 | 1 | 1 |
| Antioxidant | | | | | |
| SANTOFLEX 13 | 0 | 1 | 3 | 0 | 0 |
| NOCRAC 810-NA | 0 | 0 | 0 | 1 | 3 |

IR: IR-10, made by Kuraray Co., Ltd.

Carbon black: DIABLACK H, made by Mitsubishi Kasei Corp.

Vulcanization accelerator: NOCCELER CZ, made by Ouchi-Shinko Chemical Industrial Co., Ltd.

SANTOFLEX 13: N-(1,3-dimethylbutyl)-N'-phenyl-p-phenylenediamine; made by Mitsubishi Monsanto Chemical Co.

NOCRAC 810-NA: N-phenyl-N'-isopropyl-p-phenylenediamine; made by Ouchi-Shinko Chemical Industrial Co., Ltd.

Table 3

| | Example 3 | Example 4 | Example 5 | Example 6 | Comparative Example 1 |
|---|---|---|---|---|---|
| Formulation (excerpts; part by weight) | | | | | |
| IR | 97 | 95 | 97 | 95 | 97 |
| Antioxidant | | | | | |
| Polyisoprene (II) | 3 | 5 | 0 | 0 | 0 |
| Polyisoprene (IV) | 0 | 0 | 3 | 5 | 0 |
| Polybutadiene (I) | 0 | 0 | 0 | 0 | 3 |
| Degree of plasticity (PRI) | | | | | |
| 70°C; after 3 days | 80.9 | 84.9 | 89.6 | 87.1 | 85.1 |
| after 7 days | 77.9 | 76.9 | 86.6 | 85.9 | 83.9 |
| after 14 days | 74.6 | 58.4 | 74.4 | 75.2 | 71.7 |
| 100°C; after 12 hours | 74.0 | 66.9 | 62.5 | 70.8 | 72.3 |
| after 24 hours | 61.8 | 63.7 | 52.3 | 62.5 | 65.6 |
| after 72 hours | 46.0 | 33.5 | 44.7 | 51.8 | 49.8 |
| Staining test | | | | | |
| 120°C; after 12 hours | 9N | 5Y9/1 | 9N | 5Y9/1 | 5Y9/1 |
| after 24 hours | 5Y9/1 | 5Y9/1 | 5Y9/1 | 5Y9/1 | 5Y9/1 |
| Resistance to ozone | | | | | |
| after 72 hours | B-2 | B-1 | B-2 | B-1 | C-3 |
| Mechanical properties | | | | | |
| TB ($kg/cm^2$) | 304 | 280 | 296 | 289 | 265 |
| EB (%) | 590 | 580 | 590 | 590 | 510 |
| TR ($kg/cm^2$) | 81 | 78 | 82 | 83 | 70 |
| HS (JISA) | 60 | 61 | 63 | 65 | 58 |

TB: Tensile strength at break
EB: Elongation
TR: Tear strength
HS: Hardness

Table 4

| | Comp. Ex. 2 | Comp. Ex. 3 | Comp. Ex. 4 | Comp. Ex. 5 | Comp. Ex. 6 |
|---|---|---|---|---|---|
| Formulation (excerpts; part by weight) | | | | | |
| IR | 100 | 100 | 100 | 100 | 100 |
| Antioxidant | | | | | |
| SANTOFLEX 13 | 0 | 1 | 3 | 0 | 0 |
| NOCRAC 810-NA | 0 | 0 | 0 | 1 | 3 |
| Degree of plasticity (PRI) | | | | | |
| 70°C; after 3 days | 81.4 | 81.4 | 67.7 | 52.2 | 77.7 |
| after 7 days | 62.2 | 66.9 | 49.9 | 46.3 | 50.6 |
| after 14 days | 55.8 | 42.6 | 27.3 | 40.9 | 31.7 |
| 100°C; after 12 hours | 46.4 | 37.3 | 30.6 | 35.2 | 56.4 |
| after 24 hours | 30.0 | 19.6 | 21.9 | 34.3 | 31.7 |
| after 72 hours | 23.6 | Unmeasur-able | Unmeasur-able | Unmeasur-able | Unmeasur-able |
| Staining test | | | | | |
| 120°C; after 12 hours | 9N | - | 5Y7/2 | - | 7.5Y8/4 |
| after 24 hours | 5Y9/1 | - | 2.5Y6/4 | - | 2.5Y5/2 |
| Resistance to ozone after 72 hours | C-5 | C-2 | B-3 | C-3 | B-4 |
| Mechanical properties | | | | | |
| TB ($kg/cm^2$) | 301 | 299 | 303 | 310 | 304 |
| EB (%) | 560 | 560 | 600 | 580 | 600 |
| TR ($kg/cm^2$) | 52 | 67 | 64 | 58 | 86 |
| HS (JISA) | 61 | 62 | 61 | 61 | 60 |

TB: Tensile strength at break
EB: Elongation
TR: Tear strength
HS: Hardness

As is apparent from Tables 3 and 4, rubber compositions incorporating functional groups-containing polyisoprenes, which are included in the functional groups-containing diene polymers of the present invention, have higher degree of plasticity (PRI) than those incorporating commercially available antioxidants. This means that the compositions incorporating the polyisoprenes have both good resistance to heat aging and non-volatility.

Staining test also clearly shows low staining of the compositions incorporating the polyisoprenes.

The polyisoprene-based compositions also showed good results in resistance to ozone and, in spite of the polyisoprenes being internally incorporated in IR, showed good mechanical properties.

Obviously, numerous modifications and variations of the present invention are possible in light of the above teachings. It is therefore to be understood that within the scope of the appended claims, the invention may be practiced otherwise than as specifically described herein.

## Claims

**1.** A functional groups-containing diene polymer having a molecular weight of 1,100 to 110,000 and obtained by permitting functional groups represented by formulas 1, 2 and 3, respectively,

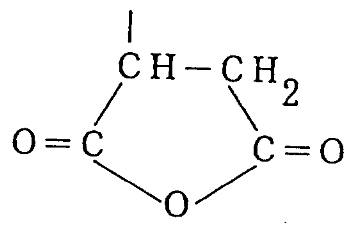

1

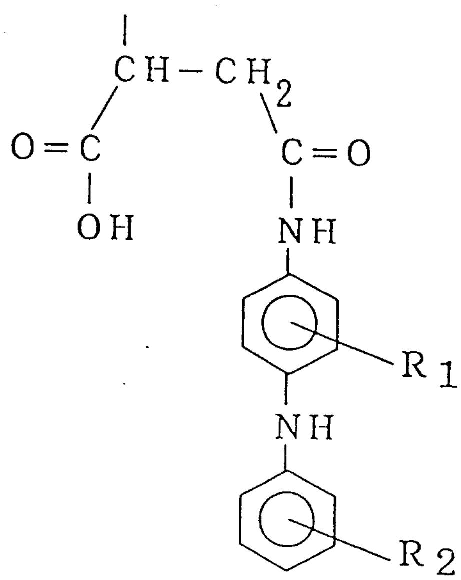

or

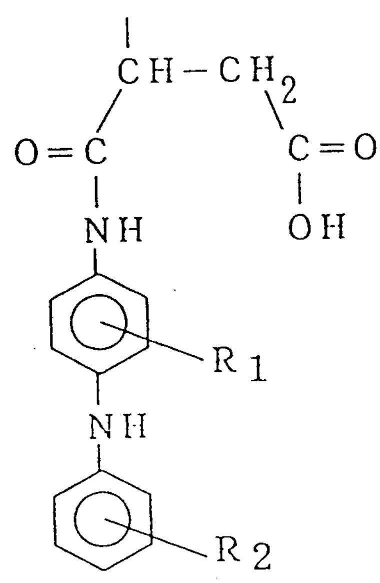

2

wherein $R_1$ and $R_2$ each represents a hydrogen atom or an alkyl group having 1 to 10 carbon atoms,

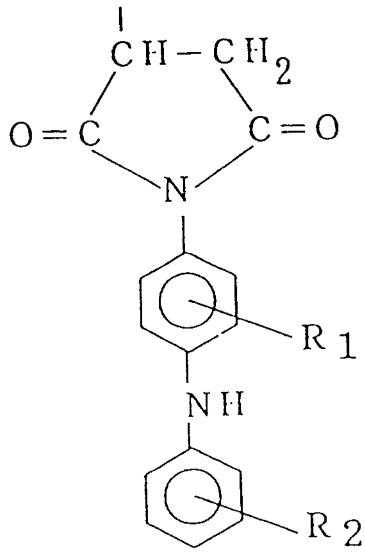

3

wherein $R_1$ and $R_2$ each represents a hydrogen atom or an alkyl group having 1 to 10 carbon atoms, to add to a diene polymer having a molecular weight of 1,000 to 50,000 in molar ratio of functional group A/(functional groups B and C) of 40/60 to 0/100 and in a total number of functional groups A, B and C per 100 pieces of units from the diene monomer constituting said diene polymer of 1 to 15.

**2.** A functional groups-containing diene polymer according to Claim 1, said diene polymer being obtained by a process which comprises the successive steps of:

permitting maleic anhydride to add to a diene polymer to introduce thereinto a functional group A represented by formula 1,

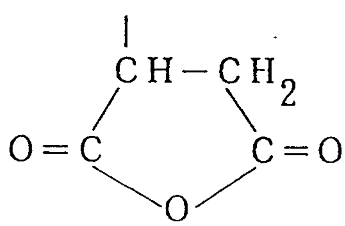

1

reacting the obtained polymer with a p-aminodiphenylamine which may have an alkyl group having 1 to 10 carbon atoms in aromatic ring and, as required,

dehydrating the reaction product, to introduce functional groups B and C represented by formulas 2 and 3, respectively

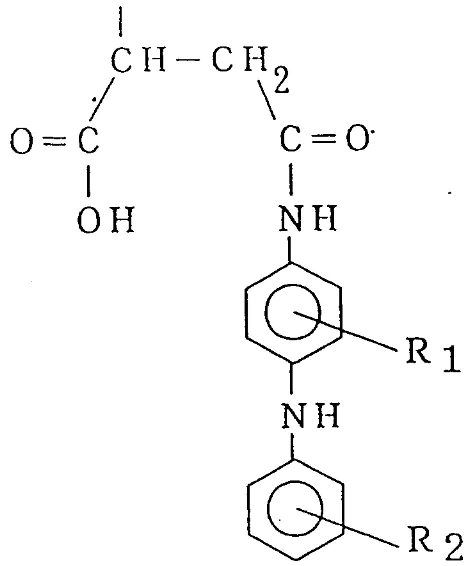

or

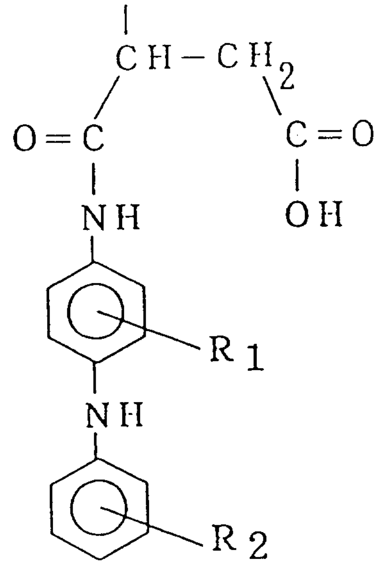

2

wherein $R_1$ and $R_2$ each represents a hydrogen atom or an alkyl group having 1 to 10 carbon atoms,

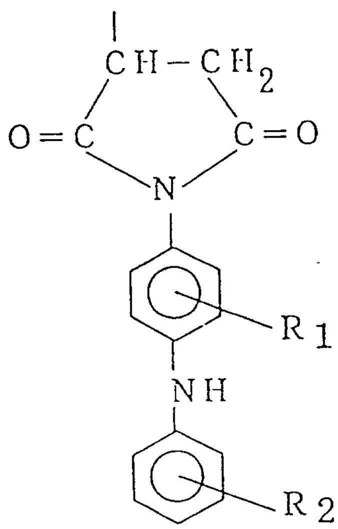

3

wherein $R_1$ and $R_2$ each represents a hydrogen atom or an alkyl group having 1 to 10 carbon atoms.

**3.** A functional groups-containing diene polymer according to either Claim 1 or Claim 2, wherein the molar ratio between said functional group B and said functional group C of (functional group B)/(functional group C) is in a range of from 80/20 to 0/100.

**4.** A functional groups-containing diene polymer according to 3, wherein the molar ratio between said functional groups A, B and C of (functional group A)/(functional group B)/(functional group C) is 0/0/100.

**5.** A functional groups-containing diene polymer according to 4, being obtained by permitting a diphenylamine-containing maleimide which may have an alkyl group having 1 to 10 carbon atoms in aromatic ring to add to a diene polymer.

**6.** A rubber composition comprising as essential components:

a functional groups-containing diene polymer having a molecular weight of 1,100 to 110,000 and obtained by permitting functional groups represented by formulas 1, 2 and 3, respectively,

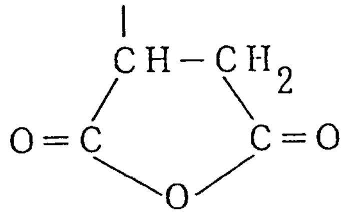

1

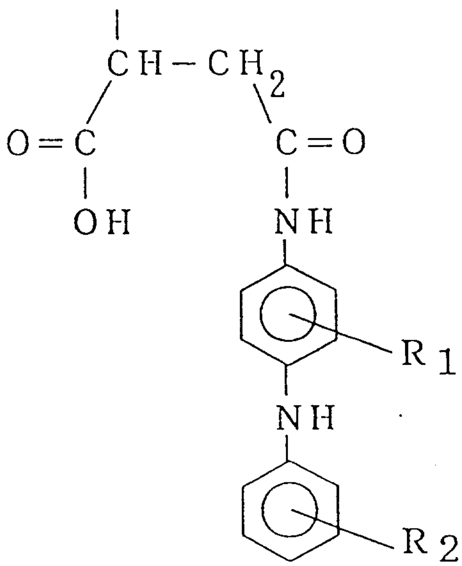

or

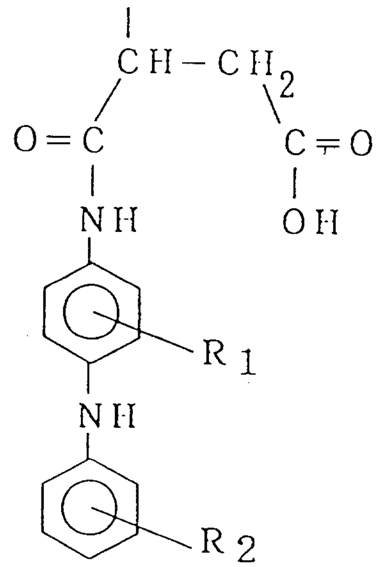

2

wherein $R_1$ and $R_2$ each represents a hydrogen atom or an alkyl group having 1 to 10 carbon atoms;

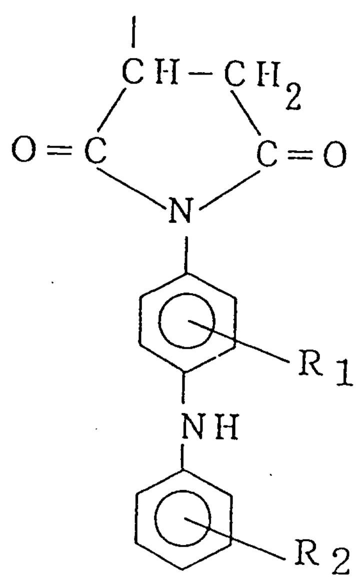

3

wherein $R_1$ and $R_2$ each represents a hydrogen atom or an alkyl group having 1 to 10 carbon atoms, to add to a diene polymer having a molecular weight of 1,000 to 50,000 in molar ratio of (functional group A)/(functional groups B and C) of 40/60 to 0/100 and in a total number of functional groups A, B and C per 100 pieces of units from the diene monomer constituting said diene polymer of 1 to 15, and

a diene-based rubber,

the ratio by weight between the two components being (functional groups-containing diene polymer)/-(diene-based rubber) being in a range of from 1/99 to 30/70.

7. A rubber composition according to Claim 6, wherein said diene-based rubber is natural rubber (NR)-,isoprene rubber (IR), butadiene rubber (BR) or styrene-butadiene rubber (SBR).

8. A rubber composition according to Claim 6, wherein the molar ratio between said functional group B and said functional group C of (functional group B)/(functional group C) is in a range of from 80/20 to 0/100.

European Patent Office

# EUROPEAN SEARCH REPORT

Application Number

EP 93 10 2178

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 743 657 (J.W.REKERS ET AL.)<br>* claims 3,6 * | 1,3-5 | C08C19/36<br>C08C19/28 |
| A | * column 8, line 68 - column 9, line 5 * | 6-7 | |
| X | EP-A-0 172 481 (BAYER AG)<br>* claims 1,5,7; example 6 *<br>* page 9, line 20 - page 10, line 16 * | 1 | |
| A | EP-A-0 066 241 (KURARAY CO. LTD.)<br>* claims 1,5,7 * | 2-5 | |

TECHNICAL FIELDS SEARCHED (Int. Cl.5)

C08C

The present search report has been drawn up for all claims

| Place of search | Date of completion of the search | Examiner |
|---|---|---|
| THE HAGUE | 03 JUNE 1993 | VAN HUMBEECK F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document